# EUROPEAN PATENT APPLICATION

(11) **EP 4 319 286 A1**
(43) Date of publication of application: **07.02.2024**
(21) Application number: 22189117.9
(22) Date of filing: 05.08.2022
(51) Int. Cl.: H04W 36/00

(54) **HANDOVER OF A UE IN A CELLULAR NETWORK**

(71) Applicant: Vodafone Group Services Limited, Newbury RG14 2FN (GB)
(72) Inventor: WORRALL, Chandrika, London, W2 6BY (GB); KULAKOV, Alexey, London, W2 6BY (GB)
(74) Representative: Boult Wade Tennant LLP

(57) **Abstract**

The disclosure relates to handover of a User Equipment (UE) in a cellular network. The UE receives a list of candidate cells from a serving cell of the UE. One or more characteristics of each candidate cell from the list of candidate cells is identified, to allow reconfiguration of the UE from a source cell to a target cell from the list of candidate cells. The one or more characteristics is referenced to a reference cell configuration stored at the UE, the reference cell configuration differing from a configuration of the source cell.

## Description

### Technical Field of the Disclosure

The disclosure concerns handover of a User Equipment (UE) in a cellular network, including methods and suitably configured UE and network entity.

### Background to the Disclosure

In cellular networks, support for UE mobility is important. Handover procedures for UEs are well established. As the UE moves in a geographical area served by the cellular network, the UE may cross cell boundaries, such that a cell (or base station) serving the UE should be updated, in order for the UE to be served by the best cell. In basic cellular network architectures, the best cell may be the cell with the best radio quality link to the UE. There have been many advances and/or optimisations introduced to the mobility procedure in the evolution of cellular networks, especially those specified by the Third Generation Partnership Project (3GPP). For example, more recent architectures may consider factors other than radio quality link in determining the best cell.

In existing cellular networks, the UE is provided with the target cell configuration as part of the handover procedure. When a trigger criteria is met (for example, the target cell quality is better than a serving cell quality), the UE accesses the target cell by performing a Random Access procedure, in order to time synchronise to the target cell. If the Random Access procedure is not successful, the UE typically falls back to the serving cell. If the Random Access procedure with regard to the target cell is successful, the UE attaches to the target cell and detaches from the serving cell.

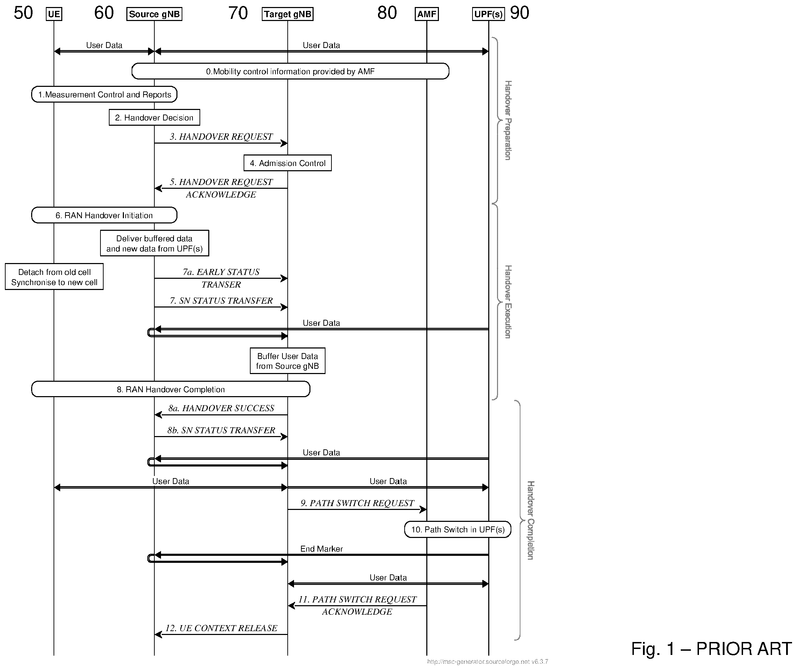

Referring first to Figure 1, there is schematically shown communication flows as part of the handover procedure, as described in 3GPP Technical Specification (TS) 38.300, section 9.2.3. The communication flows are between a UE 50, a source gNB 60; a target gNB 70; an Access and Mobility management Function (AMF) 80; and a User Plane Function 90. The process uses the following steps, as detailed in 3GPP TS 38.300, section 9.2.3.
0. The UE context within the source gNB contains information regarding roaming and access restrictions which were provided either at connection establishment or at the last Tracking Area (TA) update.
1. The source gNB 60 configures measurement procedures for the UE 50 and the UE reports according to the measurement configuration (delivering *MeasurementReport*)*.*
2. The source gNB 60 decides to handover the UE 50, based on *MeasurementReport* and Radio Resource Management (RRM) information.
3. The source gNB 60 issues a Handover Request message to the target gNB 70 passing a transparent Radio Resource Control (RRC) container with necessary information to prepare the handover at the target side. The information includes at least the target cell ID, security key (KgNB*), the Cell-Radio Network Temporary Identifier (C-RNTI) of the UE 50 in the source gNB 60, RRM-configuration including UE inactive time, basic AS-configuration including *antenna Info and DL Carrier Frequency,* the current Quality of Service (QoS) flow to Data Radio Bearer (DRB) mapping rules applied to the UE 50, the System Information Block #1 (SIB1) from the source gNB 60, the UE capabilities for different Radio Access Technologies (RATs), PDU session related information, and can include the UE reported measurement information including beam-related information if available. The PDU session related information includes the slice information and QoS flow level QoS profile (or profiles). The source gNB 60 may also request a Dual Active Protocol Stack (DAPS) handover for one or more DRBs.
4. Admission Control may be performed by the target gNB 70.
5. The target gNB 70 prepares the handover with L1/L2 and sends the HANDOVER REQUEST ACKNOWLEDGE message to the source gNB 60, which includes a transparent container to be sent to the UE as an RRC message to perform the handover. The target gNB 70 also indicates if a DAPS handover is accepted.
6. The source gNB 60 triggers the Uu handover by sending an *RRCReconfiguration* message to the UE 50, containing the information to access the target cell, at least: the target cell ID; the new C-RNTI; and the target gNB security algorithm identifiers for the selected security algorithms. It can also include a set of dedicated Random Access Channel (RACH) resources, the association between RACH resources and Synchronization Signal Block or Blocks (SSBs), the association between RACH resources and UE-specific CSI-RS configuration (or configurations), common RACH resources, and system information of the target cell, etc.
7a. For DRBs configured with DAPS, the source gNB 60 sends an EARLY STATUS TRANSFER message. The DL COUNT value conveyed in the EARLY STATUS TRANSFER message indicates Packet Data Convergence Protocol (PDCP) Sequence Number (SN) and Hyper Frame Number (HFN) of the first PDCP Service Data Unit (SDU) that the source gNB 60 forwards to the target gNB 70. The source gNB 60 does not stop assigning SNs to downlink PDCP SDUs until it sends a SN STATUS TRANSFER message to the target gNB 70 in step 8b.
7. For DRBs not configured with DAPS, the source gNB 60 sends a SN STATUS TRANSFER message to the target gNB 70 to convey the uplink PDCP SN receiver status and the downlink PDCP SN transmitter status of DRBs for which PDCP status preservation applies (that is, for Radio Link Control Acknowledge Mode or RLC AM). The uplink PDCP SN receiver status includes at least the PDCP SN of the first missing UL PDCP SDU and may include a bit map of the receive status of the out of sequence UL PDCP SDUs that the UE needs to retransmit in the target cell, if any. The downlink PDCP SN transmitter status indicates the next PDCP SN that the target gNB 70 shall assign to new PDCP SDUs, not having a PDCP SN yet.
8. The UE 50 synchronises to the target cell and completes the RRC handover procedure by sending *RRCReconfigurationComplete* message to the target gNB 70. In case of DAPS handover, the UE 50 does not detach from the source cell upon receiving the *RRCReconfiguration* message. The UE 50 releases the source resources and configurations and stops downlink/uplink (DL/UL) reception/transmission with the source upon receiving an explicit release from the target node.
8a/b. In case of DAPS handover, the target gNB 70 sends a HANDOVER SUCCESS message to the source gNB 60 to inform that the UE 50 has successfully accessed the target cell. In return, the source gNB 60 sends the SN STATUS TRANSFER message for DRBs configured with DAPS for which the description in step 7 applies, and the normal data forwarding follows as defined in 3GPP TS 38.300, section 9.2.3.2.3.
9. The target gNB 70 sends a PATH SWITCH REQUEST message to the AMF 80 to trigger the core network (5GC) to switch the DL data path towards the target gNB 70 and to establish an NG-C interface (for the control plane) instance towards the target gNB 70.
10. 5GC switches the DL data path towards the target gNB 70. The UPF 90 sends one or more "end marker" packets on the old path to the source gNB 60 per PDU session/tunnel and then can release any User-plane/Transport Network Layer (TNL) resources towards the source gNB 60.
11. The AMF 80 confirms the PATH SWITCH REQUEST message with the PATH SWITCH REQUEST ACKNOWLEDGE message.
12. Upon reception of the PATH SWITCH REQUEST ACKNOWLEDGE message from the AMF 80, the target gNB 70 sends the UE CONTEXT RELEASE to inform the source gNB 60 about the success of the handover. The source gNB 60 can then release radio and C-plane related resources associated to the UE context. Any ongoing data forwarding may continue.

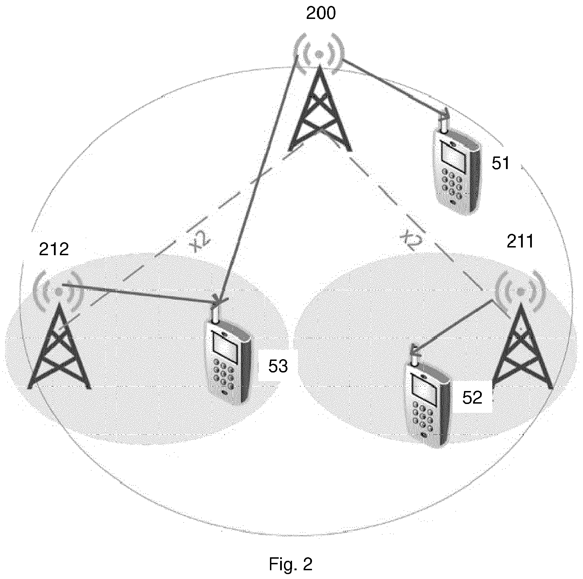

Referring to Figure 2, there is schematically depicted UEs using more than one cell, for example, in a Carrier Aggregation (CA) or Dual Connectivity (DC) configuration. A first UE 51 is attached only to a first cell (eNB) 200. A second UE 52 is attached only to a second cell (gNB) 211. A third UE 53 is attached to the first cell 200, acting as a Master eNB and to a third cell (gNB) 212, acting as a secondary gNB. If the third UE 53 moves from the coverage area of the third cell 212 to the coverage area of the second cell 211, a handover procedure takes place in which the third UE 53 is still attached to the first cell 200 as a Master eNB (although it could equivalently be a Master gNB), but changes secondary gNB from the third cell 212 to the second cell 211. In other words, the third UE 53 moves towards the second cell 211, the UE 53 changes the Secondary Cell Group (SCG) from the third cell 212 to the second cell 211 without changing the MeNB 200. In the context of the present disclosure, handover may include adding and/or changing a cell providing service to a UE.

A procedure for conditional handover (CHO) is described in 3GPP TS 38.300, section 9.2.3.4 and for conditional Primary SCG cell (PSCell) addition/change (CPAC) is discussed in 3GPP TS 37.340, section 10. These were introduced in Rel-16 and Rel-17 as enhancements to the legacy handover procedure. In CHO and CPAC, the UE is provided with a list of potential target cells for the mobility support and their reconfiguration parameters. The potential target cells are prepared for the UE arrival, in case the UE handover is performed. The UE is also provided with a condition where the UE performs the mobility procedure when the condition is met (for example, with reference to the source cell quality and/or a threshold). After the mobility procedure is executed, the list of configurations for CHO/CPAC is released by the UE. The new cell to which the UE has moved provides a list of potential target cell configurations to the UE based on the current cell configuration.

However, this creates challenges for some scenarios, such as when the Radio Access Network (RAN) operates in very high frequency bands (for example, FR2). Then, the UE could cross the coverage areas of multiple cells in a short period of time. It is especially noted that a small cell size is deployed in such high frequencies to cope with fast attenuation of signal strength. Release and reconfiguration of CHO/CPAC configurations requires some time. This is partly because of the need for signalling over the radio link, resulting in radio resource usage. This procedure is therefore inefficient and not optimal, especially for fast mobility scenarios.

### Summary of the Disclosure

Against this background, there is provided a method for handover (especially, conditional handover) of a User Equipment (UE) in a cellular network according to claim 1. There is also provided a computer program in line with claim 13, a UE in accordance with claim 14 and a network entity as defined by claim 15.

Rather than reconfiguring for a target cell with reference to the configuration of the current source cell (from which the UE is to be handed over), the candidate cells are instead compared against a reference configuration (which is beneficially stored at the UE). The reference cell configuration can be any configuration, including a configuration provided by the network (for example, by a serving cell) or a configuration of a previous or current serving cell (other than the source cell from which the UE is being handed over, for example a current configuration or previous PSCell configuration if the PSCell is in handover). Advantageously, the UE can therefore continue to use the reference configuration for further handover reconfigurations, even once the initial handover has been completed. Release and/or reconfiguration is therefore required less frequently, speeding up the handover procedure.

At the UE, a target cell for handover is determined by comparing each candidate cell (for instance, from the list of candidate cells provided by a network, for example a serving cell) against the source cell configuration, particularly source cell quality. In conditional handover, one or more conditions can be communicated to UE (which includes transmission and/or reception), each of which are generally referenced to the quality of the source cell. For instance, each condition may indicate a respective threshold to be exceeded beyond the source cell quality. The conditions can also be used for subsequent handover after completion of a first handover based on one of the conditions.

The handover procedure is generally used for a cell for which security information is computed based on security information of a network entity other than the cell to which handover relates. This may include Carrier Aggregation (CA) or Dual Connectivity scenarios, where the serving cell is a master or primary cell and the cell to which handover relates is a secondary cell (or SCG cell). Alternatively, it may include where the serving cell and the cell to which handover relate use a Central Unit (CU) / Distributed Unit (DU) split architecture. Security information for each candidate cell is computed based on a security key of the serving cell (for example, Master cell, Anchored cell or Central Unit).

The communication or messaging between the UE and the serving cell (for communication of the reference cell configuration and/or the one or more conditions, for example) generally uses RRC reconfiguration messages.

### Brief Description of the Drawings

The disclosure may be put into practice in a number of ways and preferred embodiments will now be described by way of example only and with reference to the accompanying drawings, in which:
Figure 1 schematically shows existing communication flows as part of the handover procedure, as described in 3GPP TS 38.300, section 9.2.3;
Figure 2 schematically depicts UEs using more than one cell, for example in a Carrier Aggregation (CA) or Dual Connectivity (DC) configuration;
Figure 3 schematically shows existing communication flows as part of the handover procedure, as described in 3GPP TS 37.340, section 10.5.1;
Figure 4 schematically shows revised communication flows, based on those of Figure 3, according to an embodiment of the disclosure;
Figure 5 illustrates a block diagram of a cells according to a known Central Unit (CU) / Distributed Unit (DU) split architecture; and
Figure 6 shows a block diagram of protocol stack layers for known communication between cells according to the CU/DU split architecture.

### Detailed Description of Preferred Embodiments

It has been recognized that handover can be made more efficient by reducing or minimizing the requirement for release and reconfiguration of conditional configurations (CHO/CPAC). If the conditional configurations can be stored and reused, the radio resources needed can be lowered. Consequently, the delay in reconfiguration of a list of potential or candidate cells can be reduced. According to the present disclosure, an approach is proposed to eliminate the drawbacks of legacy conditional handover configuration. This allows the UE to receive service from the best quality cell available, thereby improving the UE Quality of Service (QoS).

This is especially useful for scenarios in which the UE is being served by two or more cells, for instance CA or DC operation. However, the disclosure is not limited to these situations, as will be discussed in more detail below.

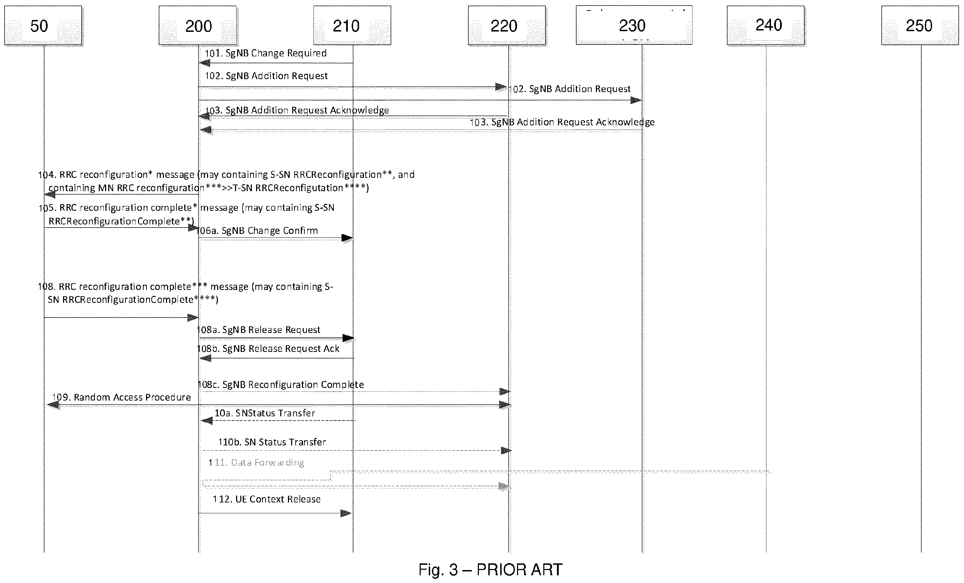

Referring now to Figure 3, there are schematically shown existing communication flows as part of the handover procedure, as described in 3GPP TS 37.340, section 10.5.1. This provides a brief description of the legacy conditional procedure for changing the Primary Secondary Cell Group (SCG) cell (PSCell) for one scenario (Secondary Node initiated conditional inter-Secondary Node change). In this diagram, the following elements are shown: UE 50; Master Node (MN) 200; Source Secondary Node (SN) 210; Target SN 220; Second potential target SN 230; Serving Gateway (SGW) 240; and MME 250.

101. The source SN initiates the conditional SN change procedure by sending *SgNB Change Required* message which contains a Continuous Packet Connectivity (CPC) initiation indication. The message also contains target SN ID(s) information and may include the SCG configuration (to support delta configuration), and contains the measurement results related to the target candidate SN(s). The message also includes a list of proposed PSCell candidates recommended by the source SN 210, including execution conditions, the upper limit for the number of PSCells, and may also include the SCG measurement configurations for CPC (for example one or more measurement IDs, measld, to be used for CPC).

102/103. The MN 200 requests the target candidate SN(s) 220, 230 to allocate resources for the UE 50 by means of the SgNB Addition procedure(s), including a CPC initiation indication, and the measurements results related to the target candidate SN and indicate the list of proposed PSCell candidates received from the source SN 210, but not including execution conditions. Within the list of PSCells, the SN decides the list of PSCell(s) to prepare and, for each prepared PSCell, the SN decides other SCG SCells and provides the new corresponding SCG radio resource configuration to the MN in an NR RRC configuration message (*RRCReconfiguration*****) contained in the *SgNB Addition Request Acknowledge* message. If forwarding is needed, the target SN 220 provides forwarding addresses to the MN 200. The target SN 220 includes the indication of the full or delta RRC configuration, and the list of prepared PSCell IDs to the MN 200. The target SN 220 can either accept or reject each of the candidate cells suggested by the source SN 210. In other words, it cannot come up with any alternative candidates.

104. The MN 200 sends to the UE 50 an *RRCConnectionReconfiguration* message (*RRCConnectionReconfiguration**) including the CPC configuration, (that is, a list of *RRCConnectionReconfiguration**** messages) and associated execution conditions, in which a *RRCConnectionReconfiguration**** message contains a *RRCReconfiguration***** received from the candidate SN 220 and possibly an MCG configuration. Besides, the *RRCConnectionReconfiguration* message (*RRCConnectionReconfiguration**) can also include the current MCG updated configuration, for example, to configure the required conditional measurements, as well as the NR RRC configuration message *(RRCReconfigutation***) generated by the source-SN 210. The RRCReconfiguration message is used to configure conditional reconfiguration parameters for a SCG and full details of this message are included at the end of this disclosure.

105. The UE 50 applies the RRC configuration (in *RRCConnectionReconfiguration**) excluded the CPC configuration, stores the CPC configuration and replies to the MN 200 with an *RRCConnectionReconfigurationComplete* message (*RCConnectionReconfigurationComplete**)*,* which can include a New Radio (NR) RRC response message (*RRCReconfigurationComplete***)*.* In case the UE 50 is unable to comply with (part of) the configuration included in the *RRCConnectionReconfiguration** message, it performs the reconfiguration failure procedure.

106a. If an NR RRC response message is included, the MN 200 informs the source SN 210 with the NR RRC response message (*RRCReconfigutationComplete***) for the source SN via *SgNB Change Confirm* message.

The MN 200 sends the *SgNB Change Confirm* message towards the Source SN 210 to indicate that CPC is prepared, and in such case the source SN 210 continues providing user data to the UE 50. If early data forwarding is applied, the MN 200 informs the source SN 210 the data forwarding addresses as received from the target SN 220, the source SN 210, if applicable, starts early data forwarding. The PDCP PDU and/or PDCP SDU forwarding may take place during early data forwarding. In case multiple Target SNs are prepared, the MN 200 includes a list of Target SgNB ID and list of data forwarding addresses to the source SN 210.

107. The UE 50 starts evaluating the execution conditions. If the execution condition of one candidate PSCell is satisfied, the UE 50 applies *RRCConnectionReconfiguration* message (*RRCConnectionReconfiguration****) corresponding to the selected candidate PSCell, and sends an *RRCConnectionReconfigurationComplete* message (*RRCConnectionReconfigurationComplete****)*,* including an NR RRC message (*RRCReconfigurationComplete*****) for the selected candidate PSCell, and the selected PSCell information to the MN 200.

108. If the RRC connection reconfiguration procedure was successful, the MN 200 informs the target SN 220 via *SgNB Reconfiguration Complete* message, including the SN *RRCReconfigurationComplete***** response message for the target SN. The MN 200 sends the SgNB Release Request messages to cancel CPC in the other target candidate SNs, if configured.

109. The UE 50 synchronizes to the target SN 220 indicated in *RRCConnectionReconfiguration* ***.

110. For SN-terminated bearers using RLC AM, the source SN sends the SN Status Transfer, which the MN sends then to the target SN, if needed.

111. If applicable, data forwarding from the source SN 210 takes place. It may be initiated as early as the source SN 210 receives the early data forwarding message from the MN 200.

112. Upon reception of the *UE Context Release* message, the source SN 210 releases radio and C-plane related resources associated to the UE context. Any ongoing data forwarding may continue. After the CPC successful completion, the UE 50 releases the CPC configuration by the source SN 210.
Below are the configuration parameters or Information Elements (IEs) used in the existing system for configuring conditional PSCell change, equivalent to handover.

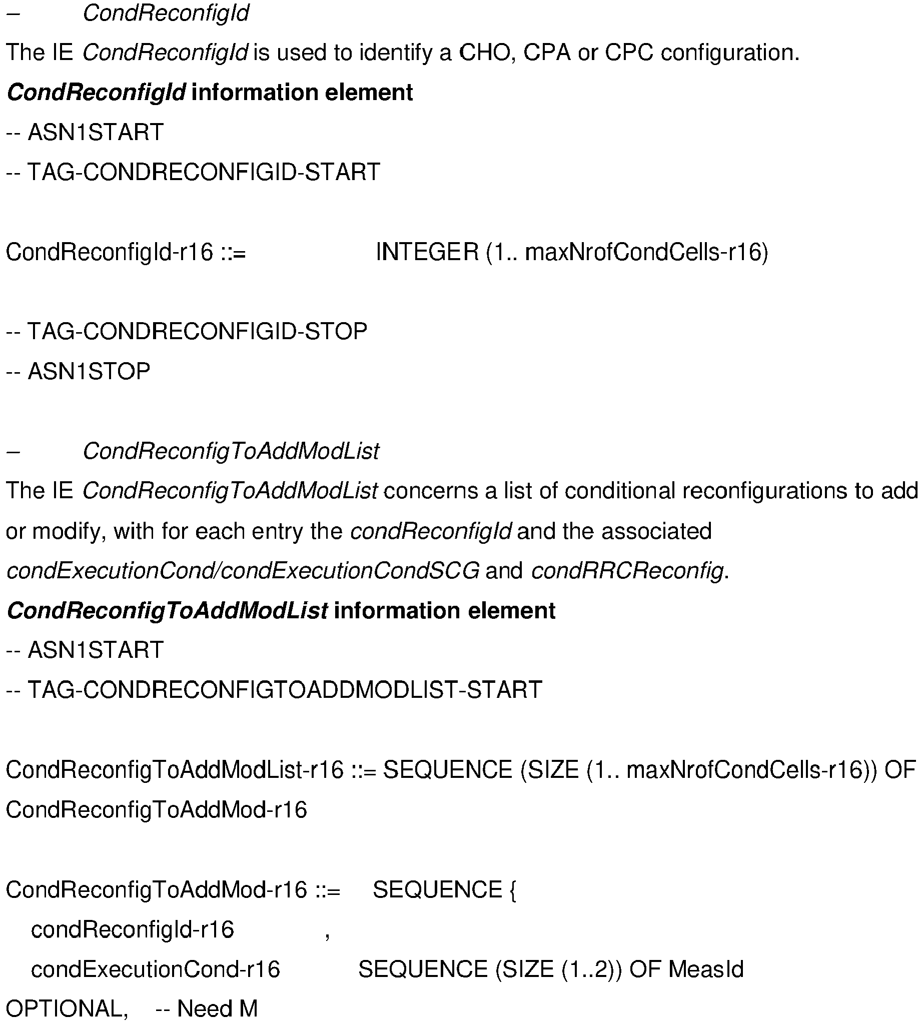

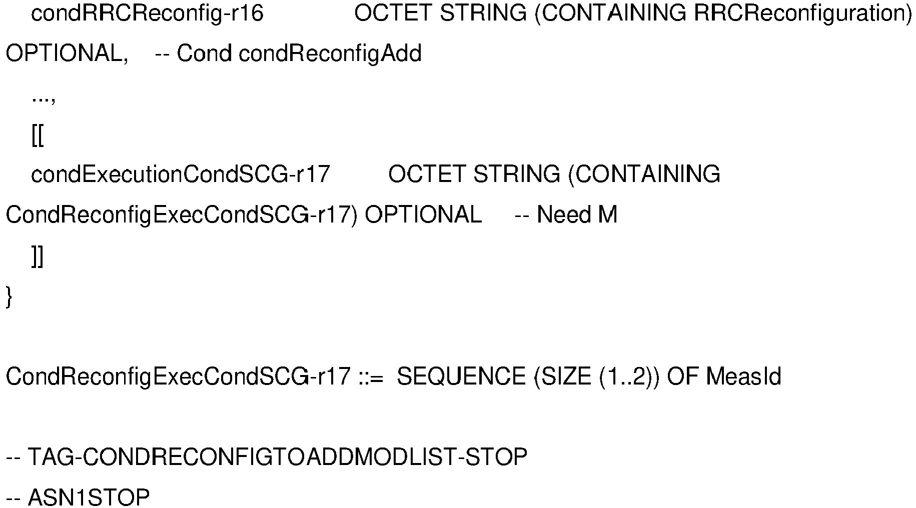

| ***CondReconfigToAddMod* field descriptions** |
|---|
| ***condExecutionCond*** |
| The execution condition that needs to be fulfilled in order to trigger the execution of a conditional reconfiguration for CHO, CPA, intra-SN CPC without MN involvement or MN initiated inter-SN CPC. When configuring 2 triggering events (Meas Ids) for a candidate cell, network ensures that both refer to the same *measObject.* If network configures *condEventD1* or *condEventT1* for a candidate cell network configures a second triggering event *condEventA3, condEventA4* or *condEventA5.* Network does not configure both *condEventD1* or *condEventT1* for the same candidate cell. For CPAC, the *RRCReconfiguration* message contained in *condRRCReconfig* cannot contain the field *scg-State.* |

| ***condExecutionCondSCG*** |
|---|
| Contains execution condition that needs to be fulfilled in order to trigger the execution of a conditional reconfiguration for SN initiated inter-SN CPC. The Meas Ids refer to the *measConfig* associated with the SCG. When configuring 2 triggering events (Meas Ids) for a candidate cell, network ensures that both refer to the same *measObject.* For each *condReconfigurationld,* the network always configures either *triggerCondition* or *triggerConditionSCG* (not both). |

| ***CondReconfigToAddMod* field descriptions** |
|---|
| ***condRRCReconfig*** |
| The *RRCReconfiguration* message to be applied when the condition(s) are fulfilled. The *RRCReconfiguration* message contained in *condRRCReconfig* cannot contain the field *conditionalReconfiguration,* the field *daps-Config* or the configuration for target SCG for CHO. |

| **Conditional Presence** | **Explanation** |
|---|---|
| *condReconfigAdd* | The field is mandatory present when a *condReconfigld* is being added. Otherwise the field is optional, need M. |

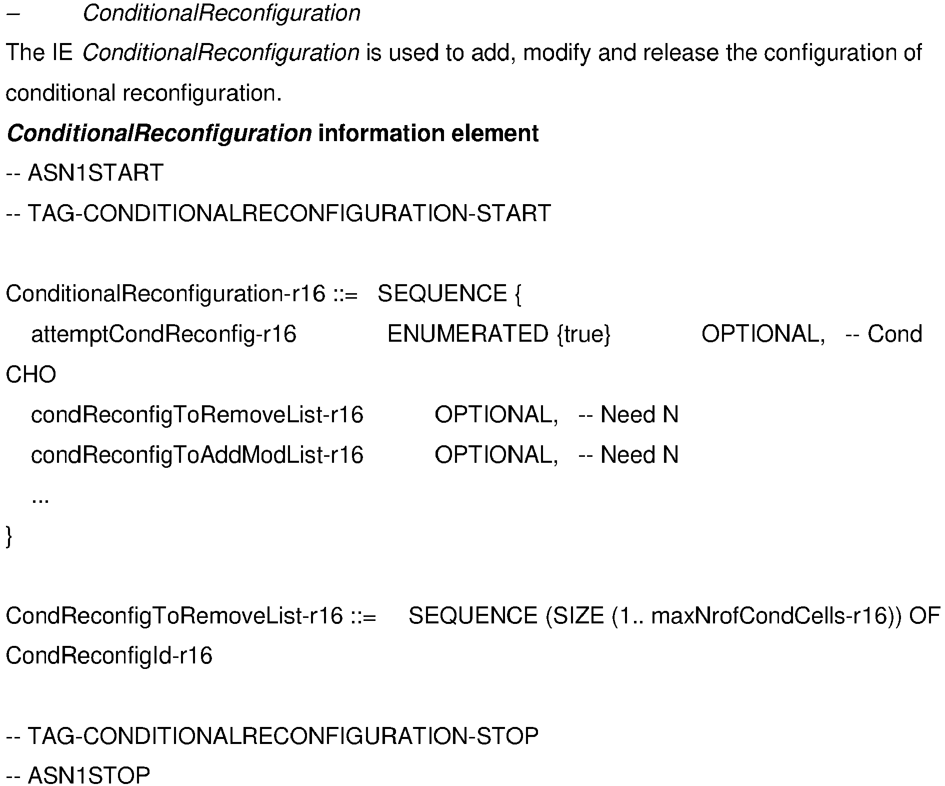

| ***ConditionalReconfiguration* field descriptions** |
|---|
| ***attemptCondReconfig*** |
| If present, the UE shall perform conditional reconfiguration if selected cell is a target candidate cell and it is the first cell selection after failure as described in clause 5.3.7.3. |
| ***condReconfigToAddModList*** |
| List of the configuration of candidate SpCells to be added or modified for CHO, CPA or CPC. |
| ***condReconfigToRemoveList*** |
| List of the configuration of candidate SpCells to be removed. |

| **Conditional Presence** | **Explanation** |
|---|---|
| *CHO* | The field is optional present, Need R, if the UE is configured with at least a candidate SpCell for CHO. Otherwise the field is not present. |

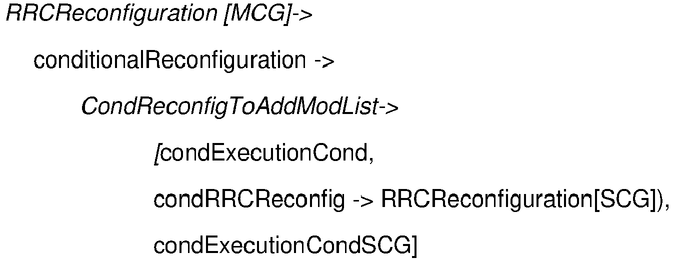

As can be seen above, CondReconfigToAddMod contains a condReconfigId, condExecutionCond / condExecutionCondSCG and condRRCReconfig. condExecutionCondSCG is normally calculated with reference to the serving SCG in order to optimise signalling (with a delta configuration to the serving SCG). However, this means that whenever the serving SCG is changed, the UE needs to be updated with a new set of conditional configurations. This is the reason that the UE needs to release the conditional configuration after a successful CPC execution.

To overcome the conditional configuration association to the serving SCG configuration, a solution is developed. Specifically, according to one embodiment of the disclosure, the conditional SCG configuration is computed referencing to a reference SCG configuration. The reference SCG configuration may advantageously be provided to the UE 50 at the RRC connection to the source PCell. In scenarios where CPC applies, it is assumed that the PCell does not change. Thus, the security information details for the candidate PSCells are computed based on the security key of the PCell.

This approach is not limited to PSCell change and can include PSCell or SCell addition. In such implementation, the conditional PSCell addition configuration may be provided to the UE, referenced to a reference PSCell configuration. Again, the reference PSCell configuration is beneficially provided to the UE by the PCell (MeNB/ MgNB/ Master Node) at the time that the UE establishes a RRC connection to the network (via PCell).

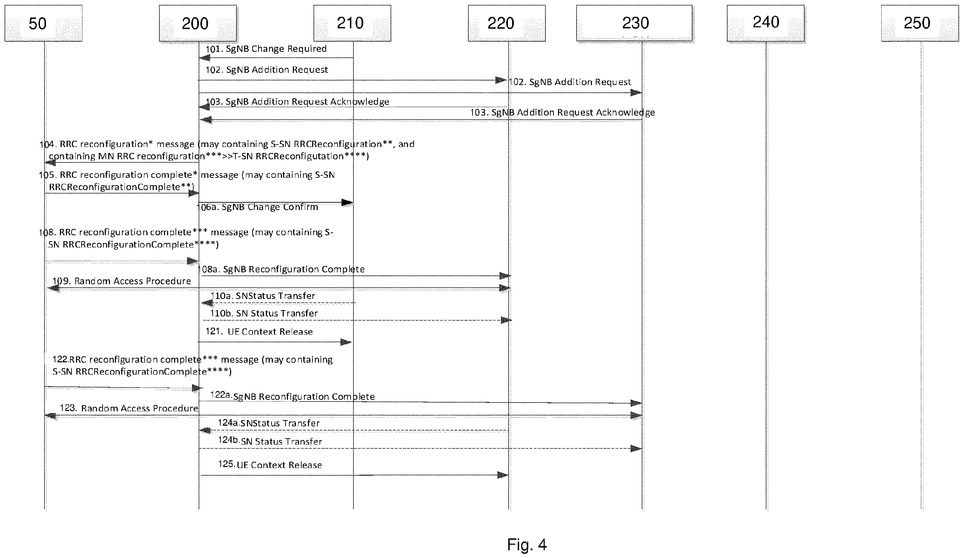

Referring next to Figure 4, there are schematically shown revised communication flows, based on those of Figure 3. This thereby provides an example of PSCell (SgNB) change scenario and illustrates an example UE operation using the stored conditional configurations. Where the same features are shown as those shown in Figure 3, the same reference numerals are used. In particular, steps 101 to 110 are the same as that of Figure 3 and reference is made to the description above.

121. After performing data forwarding, the UE context is released at the source SN 210. The UE 50 stores the conditional configuration.

122. The UE 50 monitors for conditional configuration execution criteria. When the condition configuration criteria is met (for instance, a candidate cell quality becomes better than the configured threshold above the source cell quality), the UE 50 executes a conditional PSCell change procedure according to the stored conditional configurations. The UE 50 informs the network (via MN 200) that the successful conditional SCG execution by transmitting *SgNB Reconfiguration Complete* message, including the SN *RRCReconfigurationComplete***** response message for the target SN 220.

123. The UE 50 synchronizes to the target SN 220 indicated in *RRCConnectionReconfiguration****.

124. For SN terminated bearers using RLC AM, the source SN 210 sends the SN Status Transfer message, which the MN 200 sends then to the target SN 220, if needed.

125. Upon reception of the *UE Context Release* message, the source SN 210 releases radio and C-plane related resources associated to the UE context. Any ongoing data forwarding may continue. If applicable, data forwarding from the source SN 210 takes place. It may be initiated as early as the source SN 210 receives the early data forwarding message from the MN 200.

For handover decisions, layer 3 measurements are normally used, which are averaged over a given period. It should be noted that the above procedure (and indeed, any approach according to the disclosure), is not limited to the use of layer 3 measurements, as in existing handover. Approaches according to the disclosure can be applied based on layer 2 measurements (performed at MAC, RLC or PDCP layer) or even layer 1 measurements (performed at the physical layer).

In a general sense, there may be considered an approach for (conditional) handover of a UE in a cellular network, where the UE receives a list of candidate cells from a serving cell of the UE. This approach may be considered as a method, a computer program and/or an appropriately configured UE or network entity (for example, a cell, eNB or gNB).

In particular, one or more characteristics of each candidate cell from the list of candidate cells are identified. In one aspect, the one or more characteristics may be stored or retrieved at the UE or in the cellular network. In another aspect, the identification may comprise the cellular network (for instance, the serving cell) communicating the one or more characteristics to the UE, for example together with at least one condition for handover. In this context, communicating includes transmitting and/or receiving. The one or more characteristics are referenced to a reference cell configuration stored at the UE. According to all aspects, it will be understood that the reference cell configuration differs from a configuration of a source cell (which is a cell to which the handover relates). The one or more characteristics may thereby allow reconfiguration of the UE from the source cell to a target cell from the list of candidate cells. These aspects and their features may be combined.

In fact, there may be more than one reference cell configuration. In this way, each candidate target cell configuration may be computed with reference to a one of multiple reference configurations. If multiple reference configurations are used to generate candidate cell configurations, the UE is advantageously also informed the reference configuration that is used for generating a particular candidate cell configuration. in other words, the target cell configuration for each candidate target cell could indicate which reference cell configuration is being used. In the subsequent discussions, one reference configuration will be detailed, but it can be understood that this can readily be extended to multiple reference configurations.

In particular, the reference cell configuration stored at the UE need not only be used for one handover procedure. The same reference cell configuration may be used for handover reconfiguration, subsequent to handover to the determined target cell. In embodiments, the reference cell configuration is communicated to the UE from the cellular network (for example, a serving cell, which may be a Master Node). Alternatives to this will be considered below.

Determining the target cell may comprise evaluating or comparing a quality (for example, a radio link quality or signal strength) of each candidate cell from the list of candidate cell according to at least one condition (particularly, the at least one condition communicated by the cellular network to the UE). The evaluating or comparing may additionally (or alternatively) be based on a source cell quality. In particular, the at least one condition (for example, a threshold) may be referenced to the source cell quality. Advantageously, the at least one condition is stored at the UE. It may then be used for handover determination, subsequent to handover to the determined target cell.

In some embodiments, the at least one condition is communicated to the UE from the cellular network (for example, a serving cell, which may be a Master Node). Communication between the UE and the serving cell typically comprises Radio Resource Control (RRC) reconfiguration messages.

Beneficially, the source cell (to which the handover relates) has security information computed based on security information of a network entity other than the source cell. In some embodiments, the UE may be a single subscriber that simultaneously receives service from two cells, including CA or DC operations. In one such option, the serving cell may be a master or primary cell and the cell to which handover relates may be a secondary cell. Then, security information for each candidate cell from the list of candidate cells may be computed based on a security key of the serving cell (a master or primary cell).

Before returning to this general sense of the disclosure below, it is noted that, although specific embodiments have now been described, the skilled person will appreciate that various modifications and alternations are possible.

In the embodiments described hereinabove, the reference configuration is provided by the MN to the UE. However, alternatives are possible. For example, the reference configuration could be hardcoded into the UE and/or dictated by the relevant standard specification. Alternatively, the reference configuration could be based on an earlier source PSCell configuration and CPC configurations. These can be stored by the UE after the CPC execution. Until the CPC configurations are updated by the network, the UE stores the previous source cell configuration to be used as the reference configuration for the CPC execution. In this way, the possibility for a PSCell change by a fast-moving UE can be enabled, but the computation of the PSCell configuration can be kept the same as the legacy system.

The approach of the present disclosure is well suited to conditional handover. However, it may be applied to other types of handover where a candidate target cell configuration is communicated. There, the candidate target cell configuration may be referenced to a reference cell configuration. In these cases, the handover decision is advantageously made by the source cell, based on real measurements provided by the UE (as in conventional handover). Then, the UE may provide target cell measurements. The cellular network (base station, Master node or Serving secondary cell) may then make a decision for handover based on the measurements provided by the UE. The cellular network prepares the candidate target cells and provides the UE with the candidate target cell configuration (referenced to a reference cell configuration). After the network makes the decision for handover, the network informs the UE the target cell for handover. In this case, the cellular network need only communicate an index to an already provided candidate target cell configuration. This way, the size of target cell configuration signalling may be reduced. Thus, this approach still takes the advantage of signalling reduction for configuration and/or reduced handover latency (as the target cell is already prepared) due to the approach of the present disclosure.

The approach of the present disclosure is not limited to CA or DC operation. In fact, it can particularly be used for any handover (or cell addition) where the security key for the target cell is based on security information for another network entity, especially a central node.

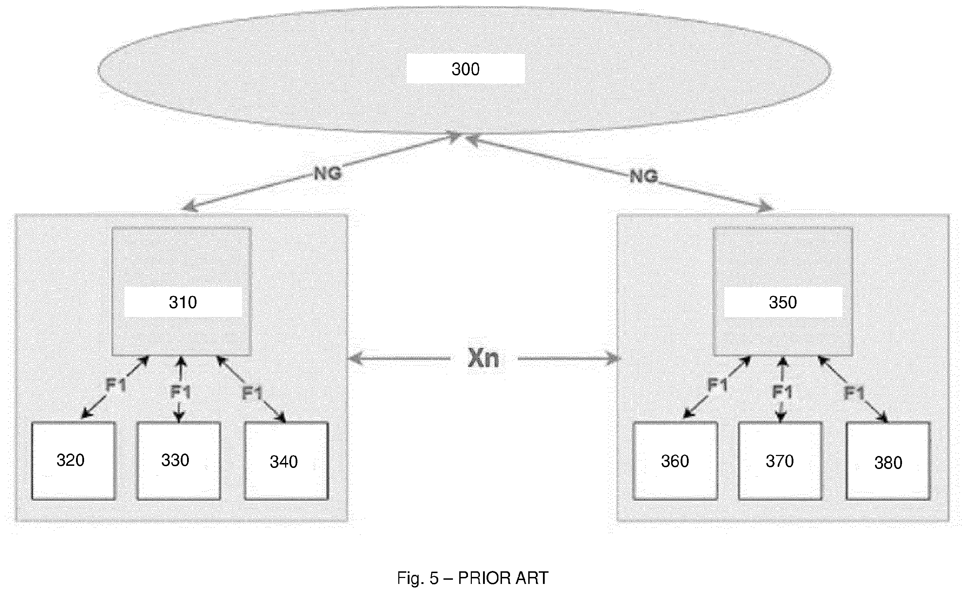

One specific alternative example concerns Central Unit (CU) / Distributed Unit (DU) split architecture. Referring next to Figure 5, there is illustrated a block diagram of a cells according to a known CU/DU split architecture. This shows: core network 300; a first gNB-CU 310; a first gNB-DU 320; a second gNB-DU 330; a third gNB-DU 340; a second gNB-CU 350; a fourth gNB-DU 360; a fifth gNB-DU 370; and a sixth gNB-DU 380. The core network 300 interfaces with the first gNB-CU 310 and the second gNB-CU 350 via NG interfaces. The first gNB-CU 310 and the second gNB-CU 350 interface with each other using a Xn interface. Each CU interfaces with its respective DUs using F1 interfaces.

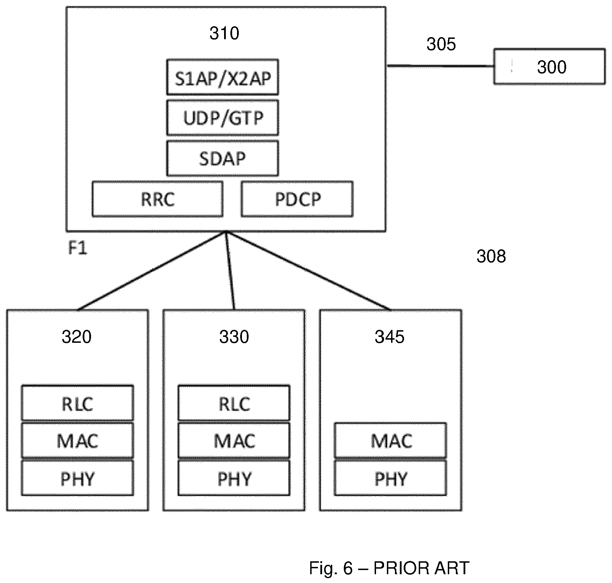

Referring now to Figure 6, there is shown a block diagram of protocol stack layers for known communication between cells according to the CU/DU split architecture. Where the same features are shown as those in Figure 5, identical reference numerals have been used. The core network 300 interfaces with the first gNB-CU 310 via a NG interface provided by backhaul network 305. The F1 interfaces between the first gNB-CU 310 and each of the first (5G) gNB-DU 320, the second (4G) gNB-DU 330 and a Wireless LAN DU 345 are provided by the Fronthaul/Midhaul network 308.

Returning to the general sense of the disclosure, it is noted that the reference cell configuration may relate to a cell currently or previously providing service to the UE. Additionally or alternatively, a configuration of a cell currently providing service to the UE may be stored to use as a reference cell configuration.

In some embodiments, multiple reference cell configurations are stored at the UE. Then, the one or more characteristics of each candidate cell being referenced to a respective one of the multiple reference cell configurations. Optionally, the one or more characteristics may be communicated together with an indication of a reference cell configuration to which the one or more characteristics are referenced.

In some implementations, the serving cell and the cell to which handover relate use a CU/DU split architecture. In this case, security information for each candidate cell from the list of candidate cells may be computed based on a security key of a CU.

It will be understood that features disclosed herein may be combined in any way and are not limited to the specific implementation described above.

As discussed above, the RRCReconfiguration message structure is copied below (as shown in 3GP TS 38.331).

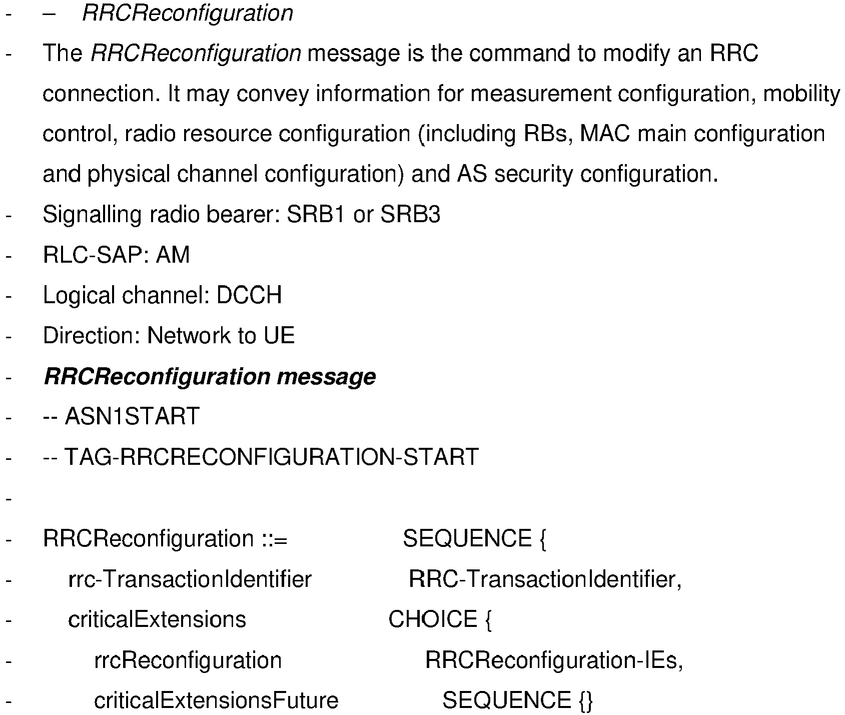

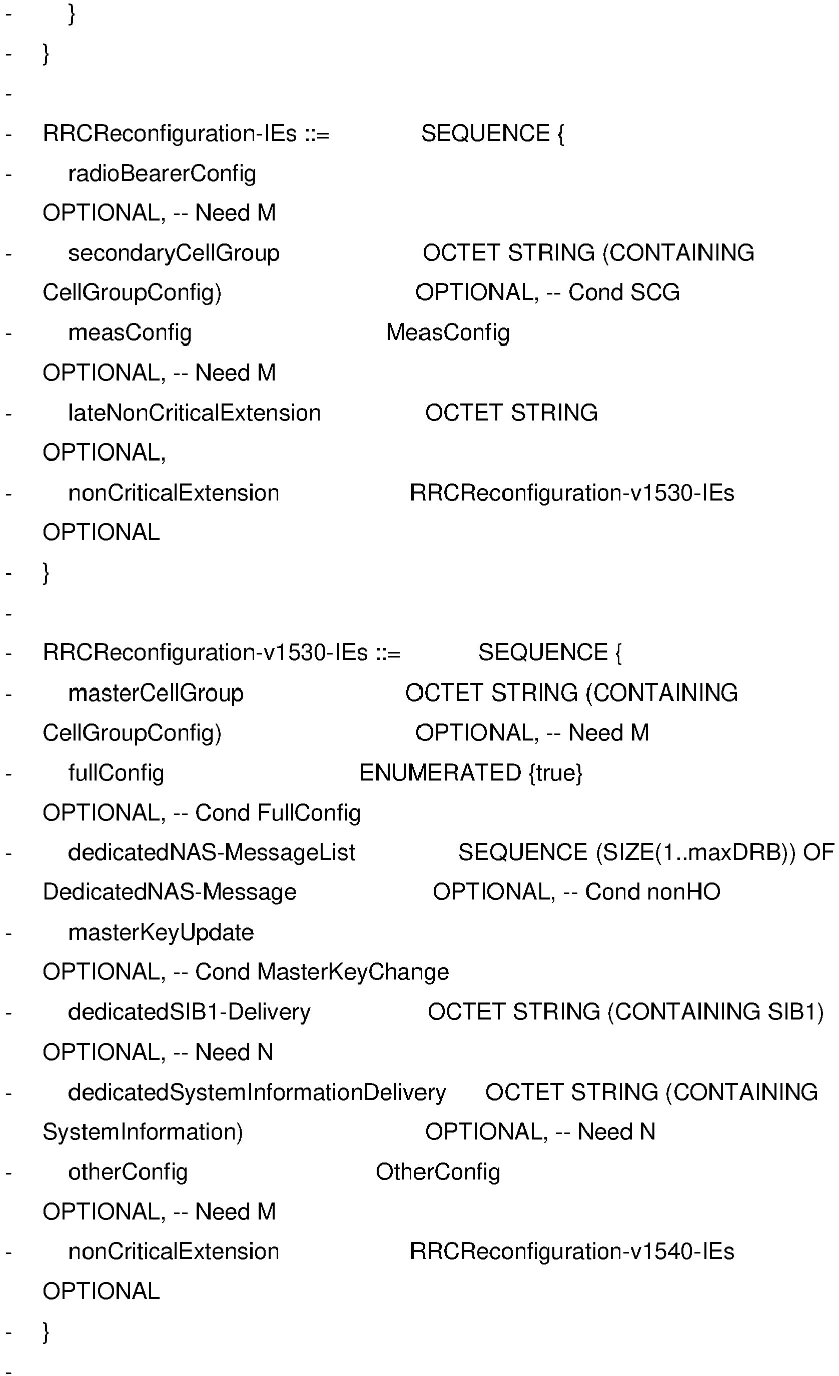

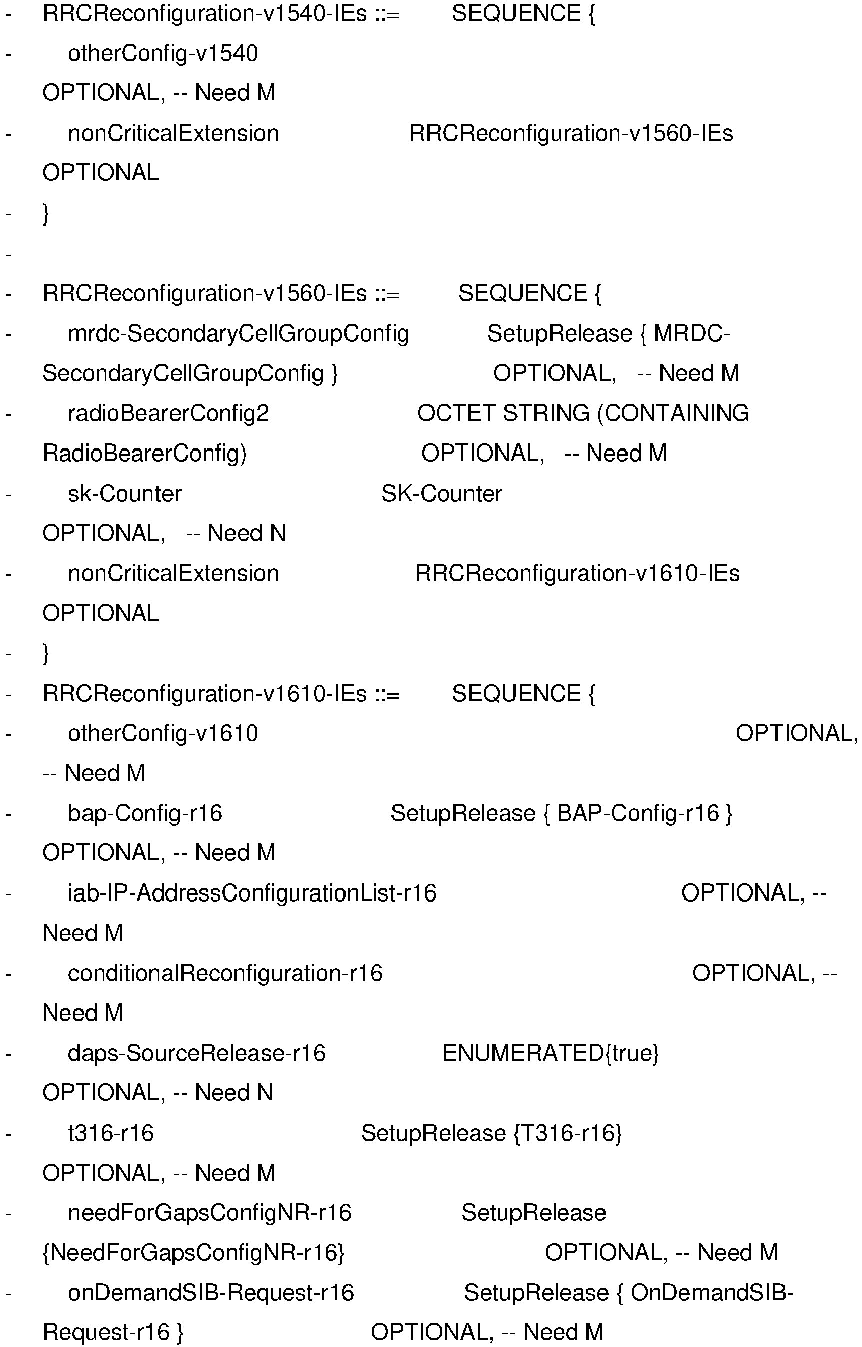

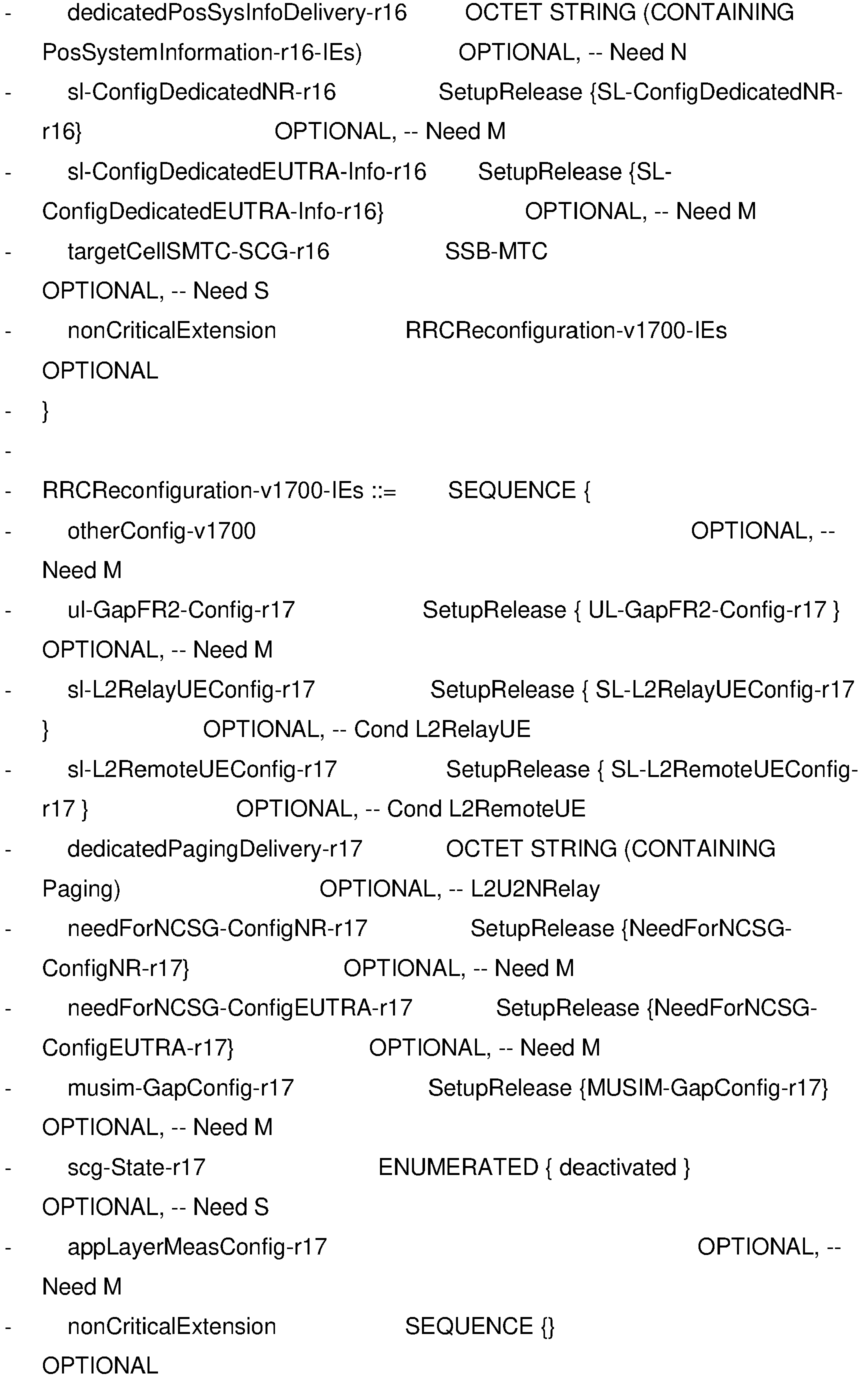

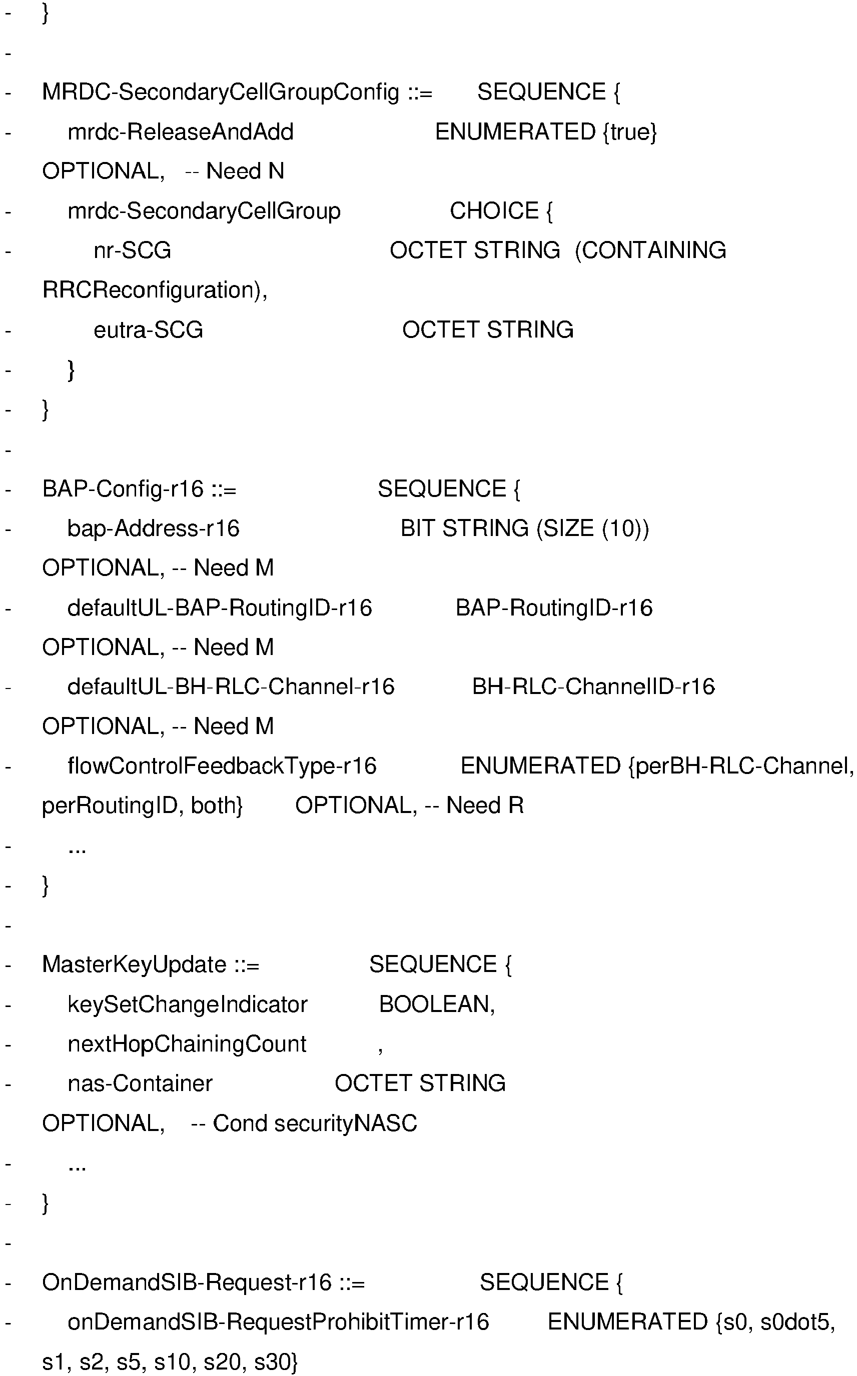

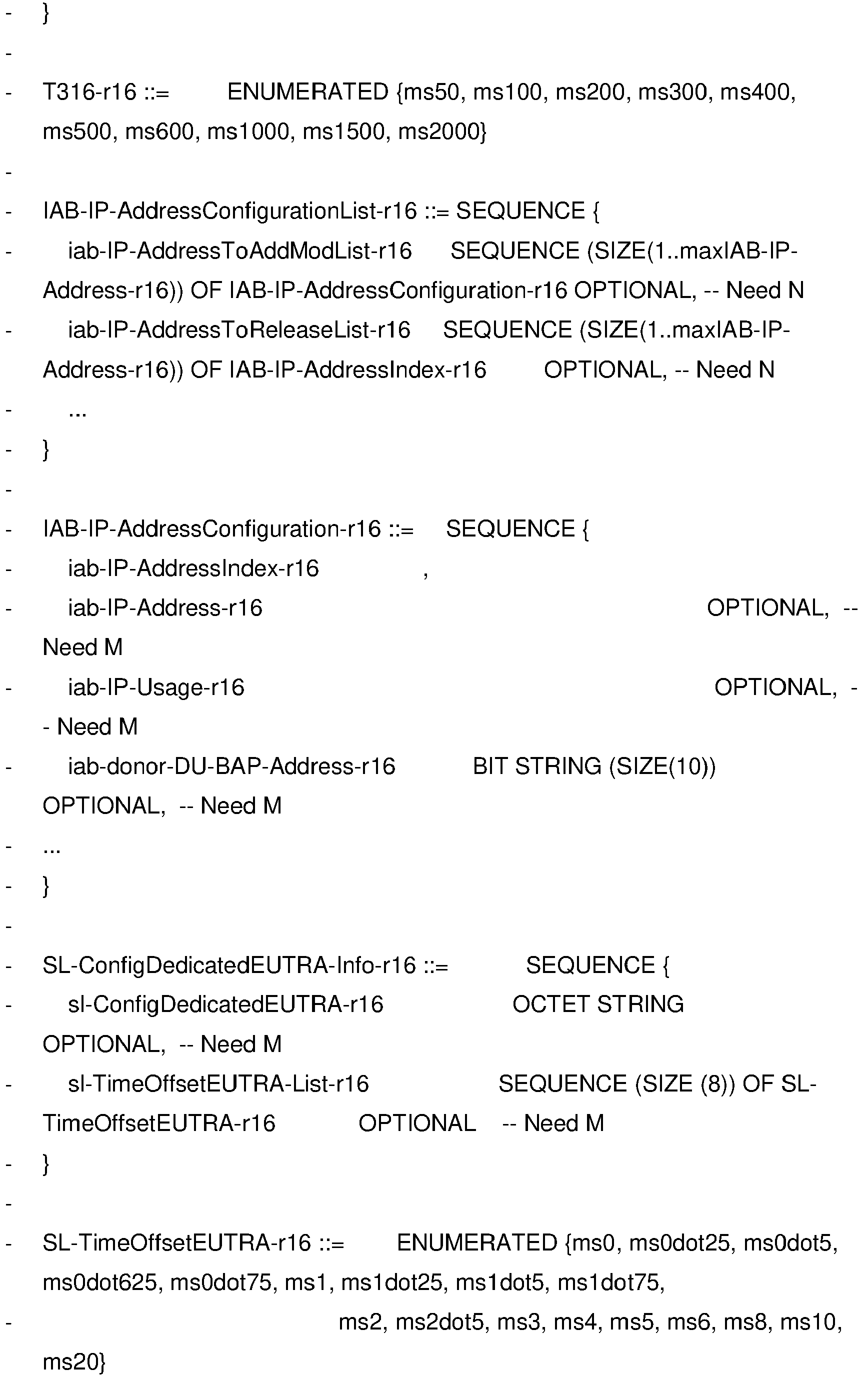

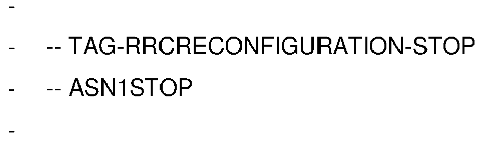

| ***RRCReconfiguration-IEs* field descriptions** |
|---|
| ***bap-Config*** |
| This field is used to configure the BAP entity for IAB nodes. |
| ***bap-Address*** |
| Indicates the BAP address of an IAB-node. The BAP address of an IAB-node cannot be changed once configured to the BAP entity. |
| ***conditionalReconfiguration*** |
| Configuration of candidate target SpCell(s) and execution condition(s) for conditional handover, conditional PSCell addition or conditional PSCell change. The field is absent if any DAPS bearer is configured or if the *masterCellGroup* includes *ReconfigurationWithSync.* For conditional PSCell change, the field is absent if the *secondaryCellGroup* includes *ReconfigurationWithSync.* The *RRCReconfiguration* message contained in *DLInformationTransferMRDC* cannot contain the field *conditionalReconfiguration* for conditional PSCell change and conditional PSCell addition. |
| ***daps-SourceRelease*** |
| Indicates to UE that the source cell part of DAPS operation is to be stopped and the source cell part of DAPS configuration is to be released. |
| ***dedicatedNAS-MessageList*** |
| This field is used to transfer UE specific NAS layer information between the network and the UE. The RRC layer is transparent for each PDU in the list. |
| ***dedicatedPagingDelivery*** |
| This field is used to transfer *Paging* message to the L2 Relay UE in RRC_CONNECTED. |
| ***dedicatedPosSyslnfoDelivery*** |
| This field is used to transfer *SIBPos* to the UE in RRC_CONNECTED. |
| ***dedicatedSIB1-Delivery*** |
| This field is used to transfer *SIB1* to the UE. The field has the same values as the corresponding configuration in *servingCellConfigCommon.* |
| ***dedicatedSystemInformationDelivery*** |
| This field is used to transfer *SIB6, SIB7, SIB8* to the UE with an active BWP with no common serach space configured. For UEs in RRC_CONNECTED, this field is used to transfer the SIBs requested on-demand. |
| ***defaultUL-BAP-RoutingID*** |
| This field is used for IAB-node to configure the default uplink Routing ID, which is used by IAB-node during IAB-node bootstrapping, migration, IAB-MT RRC resume and IAB-MT RRC re-establishment for *F1-C and non-F1* traffic. The *defaultUL-BAP-RoutingID* can be (re-)configured when IAB-node IP address for *F1-C* related traffic changes. This field is mandatory only for IAB-node bootstrapping. |
| ***defaultUL-BH-RLC-Channel*** |
| This field is used for IAB-nodes to configure the default uplink BH RLC channel, which is used by IAB-node during IAB-node bootstrapping, migration, IAB-MT RRC resume and IAB-MT RRC re-establishment *for F1-C and non-F1 traffic.* The *defaultUL-BH-RLC-Channel* can be (re-)configured when IAB-node IP address for *F1-C* related traffic changes, and the new IP address is anchored at a different IAB-donor-DU. This field is mandatory for IAB-node bootstrapping. If the IAB-MT is operating in EN-DC, the default uplink BH RLC channel is referring to an RLC channel on the SCG; Otherwise, it is referring to an RLC channel on the MCG. |
| ***flowControlFeedbackType*** |
| This field is only used for IAB-node that support hop-by-hop flow control to configure the type of flow control feedback. Value *perBH-RLC-Channel* indicates that the IAB-node shall provide flow control feedback per BH RLC channel, value *perRoutingID* indicates that the IAB-node shall provide flow control feedback per routing ID, and value *both* indicates that the IAB-node shall provide flow control feedback both per BH RLC channel and per routing ID. |
| ***fullConfig*** |
| Indicates that the full configuration option is applicable for the *RRCReconfiguration* message for intra-system intra-RAT HO. For inter-RAT HO from E-UTRA to NR, *fullConfig* indicates whether or not delta signalling of SDAP/PDCP from source RAT is applicable. This field is absent if any DAPS bearer is configured or when the *RRCReconfiguration* message is transmitted on SRB3, and in an *RRCReconfiguration* message for SCG contained in another *RRCReconfiguration* message (or *RRCConnectionReconfiguration* message, see TS 36.331 [10]) transmitted on SRB1. |
| ***iab-IP-Address*** |
| This field is used to provide the IP address information for IAB-node. |
| ***iab-IP-Addresslndex*** |
| This field is used to identify a configuration of an IP address. |
| ***iab-IP-AddressToAddModList*** |
| List of IP addresses allocated for IAB-node to be added and modified. |
| ***iab-IP-AddressToReleaseList*** |
| List of IP address allocated for IAB-node to be released. |
| ***iab-IP-Usage*** |
| This field is used to indicate the usage of the assigned IP address. If this field is not configured, the assigned IP address is used for all traffic. |
| ***iab-donor-DU-BAP-Address*** |
| This field is used to indicate the BAP address of the IAB-donor-DU where the IP address is anchored. |
| ***keySetChangelndicator*** |
| Indicates whether UE shall derive a new K_{gNB}. If *reconfigurationWithSync* is included, value *true* indicates that a K_{gNB} key is derived from a K_{AMF} key taken into use through the latest successful NAS SMC procedure, or N2 handover procedure with K_{AMF} change, as described in TS 33.501 [11] for K_{gNB} re-keying. Value *false* indicates that the new K_{gNB} key is obtained from the current K_{gNB} key or from the NH as described in TS 33.501 [11]. |
| ***masterCellGroup*** |
| Configuration of master cell group. |
| ***mrdc-ReleaseAndAdd*** |
| This field indicates that the current SCG configuration is released and a new SCG is added at the same time. |
| ***mrdc-SecondaryCellGroup*** |
| Includes an RRC message for SCG configuration in NR-DC or NE-DC. For NR-DC (nr-SCG), *mrdc-SecondaryCellGroup* contains the *RRCReconfiguration* message as generated (entirely) by SN gNB. In this version of the specification, the RRC message can only include fields *secondaryCellGroup, otherConfig, conditionalReconfiguration, measConfig* and *bap-Config.* For NE-DC (eutra-SCG), *mrdc-SecondaryCellGroup* includes the E-UTRA *RRCConnectionReconfiguration* message as specified in TS 36.331 [10]. In this version of the specification, the E-UTRA RRC message can only include the field *scg-Configuration.* |
| ***musim-GapConfig*** |
| Indicates the MUSIM gap configuration and controls setup/release of MUSIM gaps. |
| ***nas-Container*** |
| This field is used to transfer UE specific NAS layer information between the network and the UE. The RRC layer is transparent for this field, although it affects activation of AS security after inter-system handover to NR. The content is defined in TS 24.501 [23]. |
| ***needForGapsConfigNR*** |
| Configuration for the UE to report measurement gap requirement information of NR target bands in the *RRCReconfigurationComplete* and *RRCResumeComplete* message. |
| ***needForNCSG-ConfigEUTRA*** |
| Configuration for the UE to report measurement gap and NCSG requirement information of E-UTRA target bands in the *RRCReconfigurationComplete* and *RRCResumeComplete* message. |
| ***needForNCSG-ConfigNR*** |
| Configuration for the UE to report measurement gap and NCSG requirement information of NR target bands in the *RRCReconfigurationComplete* and *RRCResumeComplete* message. |
| ***nextHopChainingCount*** |
| Parameter NCC: See TS 33.501 [11] |
| ***onDemandSIB-Request*** |
| If the field is present, the UE is allowed to request SIB(s) on-demand while in RRC_CONNECTED according to clause 5.2.2.3.5. |
| ***onDemandSIB-RequestProhibitTimer*** |
| Prohibit timer for requesting SIB(s) on-demand while in RRC_CONNECTED according to clause 5.2.2.3.5. Value in seconds. Value s0 means prohibit timer is set to 0 seconds, value s0dot5 means prohibit timer is set to 0.5 seconds, value s1 means prohibit timer is set to 1 second and so on. |
| ***otherConfig*** |
| Contains configuration related to other configurations. When configured for the SCG, only fields *drx-PreferenceConfig, maxBW-PreferenceConfig, maxBW-PreferenceConfigFR2-2, maxCC-PreferenceConfig, maxMIMO-LayerPreferenceConfig, maxMIMO-LayerPreferenceConfigFR2-2, minSchedulingOffsetPreferenceConfig, minSchedulingOffsetPreferenceConfigExt, btNameList, wlanNameList, sensorNameList* and *obtainCommonLocation* can be included. |
| ***radioBearerConfig*** |
| Configuration of Radio Bearers (DRBs, SRBs, multicast MRBs) including SDAP/PDCP. In EN-DC this field may only be present if the *RRCReconfiguration* is transmitted over SRB3. |
| ***radioBearerConfig2*** |
| Configuration of Radio Bearers (DRBs, SRBs) including SDAP/PDCP. This field can only be used if the UE supports NR-DC or NE-DC. |
| ***scg-State*** |
| Indicates that the SCG is in deactivated state. This field is not used in an *RRCReconfiguration* message received within *mrdc-SecondaryCellGroup,* E-UTRA *RRCConnectionReconfiguration* or E-UTRA *RRCConnectionResume* message. The field is absent if CPA or CPC is configured for the UE, or if the *RRCReconfiguration* message is contained in *CondRRCReconfig.* |
| ***sl-L2RelayUEConfig*** |
| Contains L2 U2N relay operation related configurations used by L2 U2N Relay UE. |
| ***sl-L2RemoteUEConfig*** |
| Contains L2 U2N relay operation related configurations used by L2 U2N Remote UE. |
| ***secondaryCellGroup*** |
| Configuration of secondary cell group ((NG)EN-DC or NR-DC). |
| ***sk-Counter*** |
| A counter used upon initial configuration of S-K_{gNB} or S-K_{eNB}, as well as upon refresh of S-K_{gNB} or S-K_{eNB}. This field is always included either upon initial configuration of an NR SCG or upon configuration of the first RB with *keyToUse* set to *secondary,* whichever happens first. This field is absent if there is neither any NR SCG nor any RB with *keyToUse* set to *secondary.* |
| ***sl-ConfigDedicatedNR*** |
| This field is used to provide the dedicated configurations for NR sidelink communication/discovery. |
| ***sl-ConfigDedicatedEUTRA-Info*** |
| This field includes the E-UTRA *RRCConnectionReconfiguration* as specified in TS 36.331 [10]. In this version of the specification, the E-UTRA *RRCConnectionReconfiguration* can only includes sidelink related fields for V2X sidelink communication, i.e. *sl-V2X-ConfigDedicated, sl-V2X-SPS-Config, measConfig* and/or *otherConfig.* |
| ***sl-TimeOffsetEUTRA*** |
| This field indicates the possible time offset to (de)activation of V2X sidelink transmission after receiving DCI format 3_1 used for scheduling V2X sidelink communication. Value |
| *ms0dpt75* corresponds to 0.75ms, *ms1* corresponds to 1 ms and so on. The network includes this field only when *sl-ConfigDedicatedEUTRA* is configured. |
| ***targetCellSMTC-SCG*** |
| The SSB periodicity/offset/duration configuration of target cell for NR PSCell addition and SN change. When UE receives this field, UE applies the configuration based on the timing reference of NR PCell for PSCell addition and PSCell change for the case of no reconfiguration with sync of MCG, and UE applies the configuration based on the timing reference of target NR PCell for the case of reconfiguration with sync of MCG. If both this field and the *smtc* in *secondaryCellGroup* -> *SpCellConfig* -> *reconfigurationWithSync* are absent, the UE uses the SMTC in the *measObjectNR* having the same SSB frequency and subcarrier spacing, as configured before the reception of the RRC message. |
| ***t316*** |
| Indicates the value for timer T316 as described in clause 7.1. Value *ms50* corresponds to 50 ms, value *ms100* corresponds to 100 ms and so on. This field can be configured only if the UE is configured with split SRB1 or SRB3. |
| ***ul-GapFR2-Config-r17*** |
| Indicates the FR2 UL gap configuration to UE. In EN-DC and NGEN-DC, the SN decides and configures the FR2 UL gap pattern. In NE-DC, the MN decides and configures the FR2 UL gap pattern. In NR-DC without FR2-FR2 band combination, the network entity which configures FR2 bands to UE decides and configures the FR2 UL gap pattern. |

| **Conditional Presence** | **Explanation** |
|---|---|
| *nonHO* | The field is absent in case of reconfiguration with sync within NR or to NR; otherwise it is optionally present, need N. |
| *securityNASC* | This field is mandatory present in case of inter system handover. Otherwise the field is optionally present, need N. |
| *MasterKeyChange* | This field is mandatory present in case *masterCellGroup* includes *ReconfigurationWithSync* and *RadioBearerConfig* includes *SecurityConfig* with *SecurityAlgorithmConfig,* indicating a change of the AS security algorithms associated to the master key. If *ReconfigurationWithSync* is included for other cases, this field is optionally present, need N. Otherwise the field is absent. |
| *FullConfig* | The field is mandatory present in case of inter-system handover from E-UTRA/EPC to NR. It is optionally present, Need N, |
| | during reconfiguration with sync and also in first reconfiguration after reestablishment; or for intra-system handover from E-UTRA/5GC to NR. It is absent otherwise. |
| *SCG* | The field is mandatory present in: |
| | - an *RRCReconfiguration* message contained in an *RRCResume* message (or in an *RRCConnectionResume* message, see TS 36.331 [10]), |
| | - an *RRCReconfiguration* message contained in an *RRCConnectionReconfiguration* message, see TS 36.331 [10], which is contained in *DLInformationTransferMRDC* transmitted on SRB3 (as a response to *ULInformationTransferMRDC* including an *MCGFailurelnformation*). The field is optional present, Need M, in: |
| | - an *RRCReconfiguration* message transmitted on SRB3, |
| | - an *RRCReconfiguration* message contained in another *RRCReconfiguration* message (or in an *RRCConnectionReconfiguration* message, see TS 36.331 [10]) transmitted on SRB1 |
| | - an *RRCReconfiguration* message contained in another *RRCReconfiguration* message which is contained in *DLInformationTransferMRDC* transmitted on SRB3 (as a response to *ULInformationTransferMRDC* including an *MCG Failurelnformation*) Otherwise, the field is absent |
| *L2RelayUE* | For L2 U2N Relay UE, the field is optionally present, Need M. Otherwise, it is absent. |
| *L2RemoteUE* | The field is optional present for L2 U2N Remote UE, need M; otherwise it is absent. |
| *L2U2NRelay* | For L2 U2N Relay UE, the field is optionally present, Need N. Otherwise, it is absent. |

## Claims

1. A method for handover of a User Equipment, UE, in a cellular network, the UE receiving a list of candidate cells from a serving cell of the UE, the method comprising:
identifying one or more characteristics of each candidate cell from the list of candidate cells, to allow reconfiguration of the UE from a source cell to a target cell from the list of candidate cells, the one or more characteristics being referenced to a reference cell configuration stored at the UE, the reference cell configuration differing from a configuration of the source cell.

2. The method of claim 1, wherein the reference cell configuration stored at the UE is used for multiple handover reconfigurations.

3. The method of claim 1 or claim 2, further comprising:
determining the target cell for handover from the list of candidate cells, by comparing a quality for each candidate cell from the list of candidate cells against a quality of the source cell.

4. The method of claim 3, wherein the step of comparing is also based on at least one condition that is communicated to the UE from the cellular network.

5. The method of claim 4, wherein the at least one condition is stored at the UE and is used for handover determination subsequent to handover to the target cell.

6. The method of any preceding claim, wherein the step of identifying comprises communicating from the cellular network to the UE the one or more characteristics of each candidate cell from the list of candidate cells.

7. The method of any preceding claim, wherein one or more of:
the reference cell configuration is communicated to the UE from the cellular network or the reference cell configuration relates to a cell currently or previously providing service to the UE;
the method further comprises storing a configuration of a cell currently providing service to the UE to use as a reference cell configuration; and
multiple reference cell configurations are stored at the UE, the one or more characteristics of each candidate cell being referenced to a respective one of the multiple reference cell configurations.

8. The method of any preceding claim, wherein the handover relates to a cell for which security information is computed based on security information of a network entity other than the source cell.

9. The method of any preceding claim, wherein the serving cell is a master or primary cell and the source cell is a secondary cell or wherein the serving cell and the source cell use a Central Unit, CU, Distributed Unit, DU, split architecture.

10. The method of claim 9, wherein the serving cell and the source cell use a CU / DU split architecture, the source cell being a source DU and the target cell being a target DU, the handover being performed while maintaining the same CU.

11. The method of claim 9 or claim 10, wherein security information for each candidate cell from the list of candidate cells is computed based on a security key of the serving cell.

12. The method of any preceding claim, wherein communication between the UE and the serving cell comprises Radio Resource Control, RRC, reconfiguration messages.

13. A computer program, comprising instructions for controlling conditional handover of a User Equipment, UE, when operated by a processor of a UE or cellular network entity, the instructions causing the processor to carry out the method of any preceding claim.

14. A User Equipment, UE, in a cellular network, configured to operate in accordance with the method of any of claims 1 to 12.

15. A network entity of a cellular network, configured to operate in accordance with the method of any of claims 1 to 12.
